(19) Europäisches Patentamt
European Patent Office
Office européen des brevets

(11) **EP 4 614 466 A1**

(12) **EUROPEAN PATENT APPLICATION**
published in accordance with Art. 153(4) EPC

(43) Date of publication:
**10.09.2025 Bulletin 2025/37**

(21) Application number: **23884181.1**

(22) Date of filing: **13.06.2023**

(51) International Patent Classification (IPC):
**G06V 40/16** (2022.01)

(86) International application number:
**PCT/CN2023/099867**

(87) International publication number:
**WO 2024/093242 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.11.2022 CN 202211371012**

(71) Applicant: **Zhejiang Uniview Technologies Co., Ltd.**
**Hangzhou, Zhejiang 310051 (CN)**

(72) Inventors:
• **YAN, Xiaqing**
  **Hangzhou, Zhejiang 310051 (CN)**
• **CHEN, Meng**
  **Hangzhou, Zhejiang 310051 (CN)**
• **CHEN, Kaize**
  **Hangzhou, Zhejiang 310051 (CN)**

(74) Representative: **De Ros, Alberto et al**
**Società Italiana Brevetti S.p.A.**
**Via G. Carducci 8**
**20123 Milano (IT)**

(54) **MASK WEARING DETECTION METHOD AND APPARATUS, AND ELECTRONIC DEVICE**

(57) The present disclosure provides a mask wearing detection method and apparatus, and an electronic device, and relates to the technical field of image processing. The method comprises: acquiring a schlieren image of a subject under detection; and based on an airflow intensity corresponding to the schlieren image, determining a detection result corresponding to the subject under detection; wherein the detection result comprises not wearing a mask or wearing a mask.

```
┌─────────────────────────────────────────────────────────┐
│  Obtaining a schlieren image of an object to be detected │──── S301
└─────────────────────────────────────────────────────────┘
                            │
                            ▼
┌─────────────────────────────────────────────────────────┐
│ Determining a detection result corresponding to the      │
│ object to be detected based on an airflow intensity       │
│ corresponding to the schlieren image, where the detection │──── S302
│ result includes not wearing a mask or wearing a mask      │
└─────────────────────────────────────────────────────────┘
```

FIG. 3

**Description**

CROSS-REFERENCES TO RELATED APPLICATIONS

The present application claims priority to Chinese Patent Application No. 2022113710126 filed on November 03, 2022, entitled "Mask Wearing Detection Method and Apparatus, and Electronic Device", which is hereby incorporated by reference in its entirety.

FIELD

The present application relates to the field of image processing technologies, and in particular, to a method and an apparatus for mask wearing detection, and an electronic device.

BACKGROUND

At present, the epidemic is rampant, and wearing masks may to some extent prevent the spread of the epidemic. Therefore, mask wearing detections are conducted at entrances and exits of different public places to prevent the spread of the epidemic to a certain extent.
When conducting mask wearing detection, some access control devices are installed at the entrance and exit, and mask recognition algorithms are used to detect mask wearing by people entering and exiting through the access control devices, where the detection result includes not wearing a mask or wearing a mask.

BRIEF SUMMARY

The present application provides a method and an apparatus for mask wearing detection, and an electronic device to solve the problem of low accuracy of mask detection results in related art, thereby effectively improving the accuracy of mask detection results.
The present application provides a method for mask wearing detection, which may include:

obtaining a schlieren image of an object to be detected; and

determining a detection result corresponding to the object to be detected based on an airflow intensity corresponding to the schlieren image, where the detection result includes not wearing a mask or wearing a mask.

According to a method for mask wearing detection provided in an embodiment of the present application, determining the detection result corresponding to the object to be detected based on the airflow intensity corresponding to the schlieren image includes:

dividing, based on a preset offset interval, the schlieren image into a plurality of image blocks sequentially in a face orientation, starting from a center point of a human face of the object to be detected in the schlieren image; and

determining the detection result based on airflow intensities corresponding to the plurality of image blocks, where an airflow intensity corresponding to an image block is determined based on an average brightness of the image block.

According to a method for mask wearing detection provided in an embodiment of the present application, the method further includes:

performing human face detection on the schlieren image to determine a human facial coordinate and a human facial contour of the object to be detected; and

determining the center point of the human face based on the human facial coordinate and the human facial contour.

According to a method for mask wearing detection provided in an embodiment of the present application, determining the detection result based on airflow intensities corresponding to the plurality of image blocks includes:

determining whether a difference between an airflow intensity corresponding to a first image block and an airflow intensity corresponding to a second image block is greater than an airflow deviation threshold, starting from the second image block among the plurality of image blocks;

if the difference is greater than or equal to the airflow deviation threshold, determining a distance between the second image block and the center point of the human face as a target distance, and determining the detection result based on the target distance; and

if the difference is less than the airflow deviation threshold, determining a third image block as a new second image block, determining the second image block as a new first image block, and determining whether a difference between an airflow intensity corresponding to the new first image block and an airflow intensity corresponding to the new second image block is greater than the airflow deviation threshold, until it is determined that the difference between the airflow intensity corresponding to the new first image block and the airflow intensity corresponding to the new second image block is greater than or equal to the airflow deviation threshold, then determining a distance between the new second image block and the center point of the human face as the target distance, and determining the detection result based on the target distance.

According to a method for mask wearing detection provided in an embodiment of the present application, determining the detection result based on the target distance includes:

if the target distance is greater than or equal to a mask threshold, determining that a first detection result is not wearing a mask; if the target distance is less than the mask threshold, determining that the first detection result is wearing a mask; and

determining the detection result corresponding to the object to be detected based on the first detection result.

According to a method for mask wearing detection provided in an embodiment of the present application, determining the detection result corresponding to the object to be detected based on the first detection result includes:

determining the first detection result as the detection result;
or,

obtaining a second detection result corresponding to the object to be detected, wherein the second detection result is obtained based on a mask recognition algorithm; if both the first detection result and the second detection result are wearing a mask, determining the detection result as wearing a mask; and if at least one of the first detection result and the second detection result is not wearing a mask, determining the detection result as not wearing a mask.

According to a method for mask wearing detection provided in an embodiment of the present application, the method further includes:

obtaining a schlieren image sample of each of a plurality of preset objects wearing a mask standardly;

for each schlieren image sample, determining, based on searching for a mask edge in the schlieren image sample, an offset interval corresponding to the schlieren image sample, and determining an airflow deviation corresponding to the schlieren image sample based on the offset interval; and

determining an average of offset intervals corresponding to a plurality of schlieren image samples as the preset offset interval, and determining an average of airflow deviations corresponding to the schlieren image samples as the airflow deviation threshold.

According to a method for mask wearing detection provided in an embodiment of the present application, the schlieren image is a schlieren image in a concave mirror, and obtaining the schlieren image of the object to be detected includes:

obtaining an initial schlieren image corresponding to the object to be detected;

determining whether the object to be detected is located at a center position of a concave mirror based on the initial schlieren image; and

determining the initial schlieren image as the schlieren image in case that the object to be detected is located at the center position.

The present application further provides an apparatus for mask wearing detection, the apparatus including:

a first obtaining unit, configured to obtain a schlieren image of an object to be detected; and

a first processing unit, configured to determine a detection result corresponding to the object to be detected based on an airflow intensity corresponding to the schlieren image, where the detection result includes not wearing a mask or wearing a mask.

According to an apparatus for mask wearing detection provided in an embodiment of the present application, the first processing unit is further configured to divide, based on a preset offset interval, the schlieren image into a plurality of image blocks sequentially in a face orientation, starting from a center point of a human face of the object to be detected in the schlieren image; and determine the detection result based on airflow intensities corresponding to the plurality of image blocks, where an airflow intensity corresponding to an image block is determined based on an average brightness of the image block.

According to an apparatus for mask wearing detection provided in an embodiment of the present application, the apparatus further includes a second processing unit and a third processing unit, where

the second processing unit is configured to perform human face detection on the schlieren image to determine a human facial coordinate and a human facial contour of the object to be detected; and

the third processing unit is configured to determine the center point of the human face based on the human facial coordinate and the human facial contour.

According to an apparatus for mask wearing detection provided in an embodiment of the present application, the first processing unit is further configured to determine whether a difference between an airflow intensity corresponding to a first image block and an airflow intensity corresponding to a second image block is greater than an airflow deviation threshold, starting from the second image block among the plurality of image blocks; if the difference is greater than or equal to the airflow deviation threshold, determine a distance between the second image block and the center point of the human face as a target distance, and determine the detection result based on the target distance; and if the difference is less than the airflow deviation threshold, determine a third image block as a new second image block, determine the second image block as a new first image block, and determine whether a difference between an airflow intensity corresponding to the new first image block and an airflow intensity corresponding to the new second image block is greater than the airflow deviation threshold, until it is determined that the difference between the airflow intensity corresponding to the new first image block and the airflow intensity corresponding to the new second image block is greater than or equal to the airflow deviation threshold, then determine a distance between the new second image block and the center point of the human face as the target distance, and determine the detection result based on the target distance.

According to an apparatus for mask wearing detection provided in an embodiment of the present application, the first processing unit is further configured to: if the target distance is greater than or equal to a mask threshold, determine that a first detection result is not wearing a mask; if the target distance is less than the mask threshold, determine that the first detection result is wearing a mask; and determine the detection result corresponding to the object to be detected based on the first detection result.

According to an apparatus for mask wearing detection provided in an embodiment of the present application, the first processing unit is further configured to determine the first detection result as the detection result; or, obtain a second detection result corresponding to the object to be detected based on a mask recognition algorithm; if both the first detection result and the second detection result are wearing a mask, determine the detection result as wearing a mask; and if at least one of the first detection result and the second detection result is not wearing a mask, determine the detection result as not wearing a mask.

According to an apparatus for mask wearing detection provided in an embodiment of the present application, the apparatus further includes a second obtaining unit, a fourth processing unit, and a fifth processing unit, where

the second obtaining unit is configured to obtain a schlieren image sample of each of a plurality of preset objects wearing a mask standardly;

the fourth processing unit is configured to: for each schlieren image sample, determine, based on searching for a mask edge in the schlieren image sample, an offset interval corresponding to the schlieren image sample, and determine an airflow deviation corresponding to the schlieren image sample based on the offset interval; and

the fifth processing unit is configured to determine an average offset interval corresponding to each of a plurality of schlieren image samples as the preset offset interval, and determine an average airflow deviation corresponding to each of the schlieren image samples as the airflow deviation threshold.

According to an apparatus for mask wearing detection provided in an embodiment of the present application, the schlieren image is a schlieren image in a concave mirror, and the first obtaining unit is further configured to obtain an initial schlieren image corresponding to the object to be detected; determine whether the object to be detected is located at a center position of a concave mirror based on the initial schlieren image; and determine the initial schlieren image as the schlieren image in case that the object to be detected is located at the center position.

The present application further provides an electronic device, including a memory, a processor, and a computer program stored on the memory and executable on the processor. When executing the computer program, the processor performs any of the methods for mask wearing detection described above.

The present application further provides a non-transient computer-readable storage medium on which a computer program is stored. When executed by a processor, the computer program performs any of the methods for mask wearing detection described above.

The present application further provides a computer program product including a computer program. When executed by a processor, the computer program performs any of the methods for mask wearing detection described above.

The method and the apparatus for mask wearing detection, and the electronic device provided in the present application obtain a schlieren image of an object to be detected; and determine a detection result corresponding to the object to be detected based on an airflow intensity corresponding to the schlieren image, where the detection result includes not wearing a mask or wearing a mask. In such a way, the detection result corresponding to the object to be detected may be accurately determined based on the airflow intensity corresponding to the schlieren image, which solves the problem of low accuracy of mask detection results in related art, thereby effectively improving the accuracy of mask detection results.

BRIEF DESCRIPTION OF THE DRAWINGS

FIG. 1 is a schematic diagram of an airflow around a human body when wearing a mask and when not wearing a mask according to an embodiment of the present application;

FIG. 2 is a schematic diagram of a system for mask wearing detection according to an embodiment of the present application;

FIG. 3 is a schematic flowchart of a method for mask wearing detection according to an embodiment of the present application;

FIG. 4 is a schematic flowchart of a method for determining a detection result corresponding to an object to be detected based on an airflow intensity corresponding to a schlieren image according to an embodiment of the present application;

FIG. 5 is a schematic diagram of dividing a schlieren image into a plurality of image blocks according to an embodiment of the present application;

FIG. 6 is a schematic structural diagram of an apparatus for mask wearing detection according to an embodiment of the present application; and

FIG. 7 is a schematic physical structural diagram of an electronic device according to an embodiment of the present application.

DETAILED DESCRIPTION

The solutions in the present application are described below in conjunction with the accompanying drawings. The described embodiments are a part of the embodiments of the present application, not all of them.

The solutions provided in the embodiments of the present application may be applied to mask wearing detection scenarios. Wearing masks may to some extent prevent the spread of harmful substances. Therefore, access control devices are installed at entrances and exits of different public places, and mask recognition algorithms are used to detect mask wearing by people entering and exiting, where the detection result includes not wearing a mask or wearing a mask.

However, the mask recognition algorithm has certain limitations, such as the inability to recognize special types of masks, such as masks in peculiar shapes, and black masks, which may lead to lower accuracy in mask detection results.

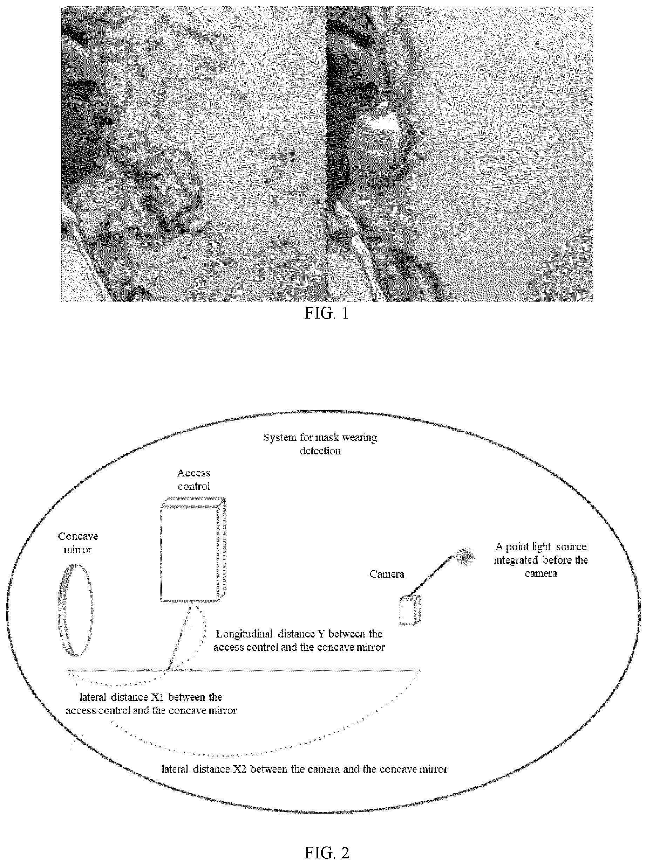

To solve the problem of low accuracy of mask detection results in related art, thereby effectively improving the accuracy of mask detection results, considering that people generate airflow in space, there is a difference in the airflow around the human body when wearing a mask and not wearing a mask. For example, FIG. 1 is referred to, which is a schematic diagram of an airflow around a human body when wearing a mask and when not wearing a mask according to an embodiment of the present application. Based on this, the embodiments of the present application provide a method for mask wearing detection to obtain a schlieren image of an object to be detected; and determine a detection result corresponding to the object to be detected based on an airflow intensity corresponding to the schlieren image, where the detection result includes not wearing a mask or wearing a mask. In such a way, the detection result corresponding to the object to be detected may be accurately determined based on the airflow intensity corresponding to the schlieren image, which solves the problem of low accuracy of mask detection results in related art, thereby effectively improving the accuracy of mask detection results.

To implement the method for mask wearing detection provided in the embodiments of the present application, a system for mask wearing detection is further provided. For example, referring to FIG. 2, which is a schematic diagram of a system for mask wearing detection according to an embodiment of the present application, the system for mask wearing detection may include a human face access control, a concave mirror, and a camera. The access control is mainly responsible for user entry permission and mask wearing detection. When people face the access control for identity verification, they are positioned on a side relative to the concave mirror and the camera. Due to the influence of air density on the refraction of light, a brightness change of a mirror in the camera may be seen through a light source, the camera, and the concave mirror. When a point light source is turned on, the light is irradiated on the concave mirror, and the light converges into a point by reflection of the concave mirror. If an edge of the camera is regarded as a blade, the camera is located directly behind a light spot, and a schlieren image formed by a dark spot, i.e., schlieren, in the concave mirror may be seen in a viewfinder. The schlieren image may be used for the method for mask wearing detection provided in the embodiments of the present application, providing a detection basis for the method for mask wearing detection.

In FIG. 2, X1 represents a lateral distance between the access control and the concave mirror, X2 represents a lateral distance between the camera and the concave mirror, and Y represents a longitudinal distance between the access control and the concave mirror.

It should be noted that while people are facing the access control for identity verification, the access control also requests the camera to take a schlieren image of the person at this time. If the identity verification fails, it means that the person does not have access permission, and a prompt message of "no permission" may be directly output; if the identity verification is successful, it indicates that the person has entry permission, and further confirmation may be made whether a "mask detection function" is enabled. If the "mask detection function" is not enabled, "mask detection successful" is directly output; if the "mask detection function" is enabled, the method for mask wearing detection provided in the embodiments of the present application may be used for mask wearing detection.

Hereinafter, the method for mask wearing detection provided in the present application is described in detail through the following specific embodiments. It may be understood that the following specific embodiments may be combined with each other, and the same or similar concepts or procedures may not be repeated in some embodiments.

Embodiment I

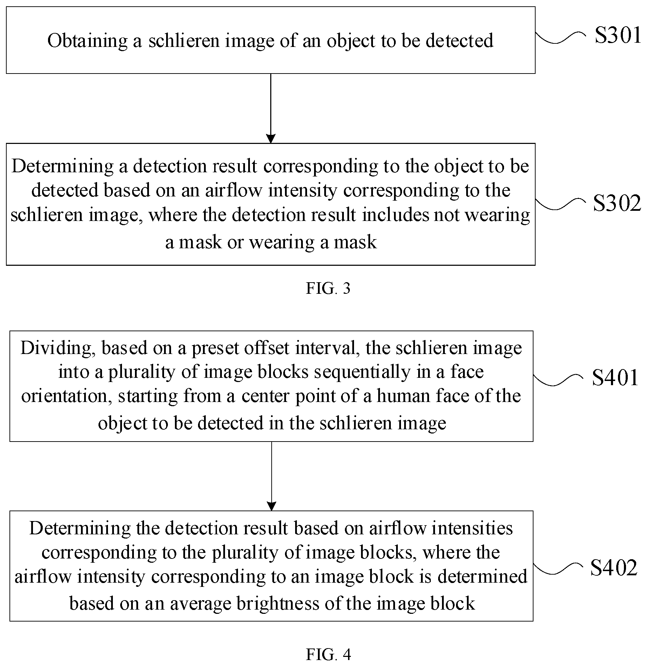

FIG. 3 is a schematic flowchart of a method for mask wearing detection according to an embodiment of the present application, which may be performed by software and/or hardware devices. For example, as shown in FIG. 3, the method for mask wearing detection may include the following steps.

S301: obtaining a schlieren image of an object to be detected.

The schlieren image is a schlieren image in a concave mirror.

For example, when obtaining the schlieren image of the object to be detected, considering that if the object is not at the center position of the concave mirror, the definition of the captured schlieren image is poor, to ensure that the obtained schlieren image is a clear schlieren image, the initial schlieren image of the object to be detected may be obtained first. It may be determined whether the object to be detected is at the center position of the concave mirror based on the initial schlieren image; if it is determined that the object to be detected is at the center position of the concave mirror, it indicates that the initial schlieren image is a clear schlieren image. Therefore, the initial schlieren image may be directly determined as the schlieren image to be obtained in this step, which ensures that the obtained schlieren image is a high-resolution schlieren image and provides a good detection basis for subsequent mask wearing detection. On the contrary, if it is determined that the object to be detected is not at the center position of the concave mirror, it indicates that the initial schlieren image is an unclear schlieren image. Therefore, it is necessary to obtain a new schlieren image and determine whether the object to be detected is at the center position of the concave mirror based on the new schlieren image, until it is determined that the object to be detected is at the center position of the concave mirror based on the new schlieren image. The new schlieren image is determined as the schlieren image to be obtained in this step, which ensures that the obtained schlieren image is a high-resolution schlieren image and provides a good detection basis for subsequent mask wearing detection.

For example, when determining whether the object to be detected is at the center position of the concave mirror based on the initial schlieren image, intelligent algorithms such as YOLO (You Only Look Once) may be used to detect the initial schlieren image. The human facial coordinate in the initial schlieren image is determined, and the center position of the concave mirror is determined based on the lateral distance X1 between the access control and the concave mirror, the lateral distance X2 between the camera and the concave mirror, and the longitudinal distance Y between the access control and the concave mirror. Then, it may be determined whether the object to be detected is at the center position of the concave mirror based on the center position of the concave mirror and the human facial coordinate. If the object to be detected is located at the center position of the concave mirror, the initial schlieren image may be directly determined as the schlieren image to be obtained in this step; on the contrary, if the object to be detected is not at the center position of the concave mirror, a prompt message may be output to prompt people to move forward or backward and obtain a new schlieren image. Then, it is determined whether the object to be detected is at the center position of the concave mirror based on the new schlieren image, until it is determined that the object to be detected is at the center position of the concave mirror based on the new schlieren image, and the new schlieren image is determined as the schlieren image to be obtained in this step.

After obtaining the schlieren image of the object to be detected, a detection result corresponding to the object to be detected is determined based on an airflow intensity corresponding to the schlieren image, that is, the following step 302 is performed:

S302 : determining a detection result corresponding to the object to be detected based on an airflow intensity corresponding to the schlieren image, where the detection result includes not wearing a mask or wearing a mask.

The airflow intensity may be determined based on the average brightness in the schlieren image. Generally, the average brightness in the schlieren image may be approximated as the airflow intensity corresponding to the schlieren image.

It may be seen that in the embodiments of the present application, by obtaining the schlieren image of the object to be detected, the detection result corresponding to the object to be detected is determined based on the airflow intensity corresponding to the schlieren image, where the detection result includes not wearing a mask or wearing a mask. In such a way, the detection result corresponding to the object to be detected may be accurately determined based on the airflow intensity corresponding to the schlieren image, which solves the problem of low accuracy of mask detection results in related art, thereby effectively improving the accuracy of mask detection results.

Based on the embodiment shown in FIG. 3, the following provides a detailed description of the solutions for determining the detection result corresponding to the object to be detected based on the airflow intensity corresponding to the schlieren image, using a second embodiment shown in FIG. 4.

Embodiment II

FIG. 4 is a schematic flowchart of a method for determining a detection result corresponding to an object to be detected based on an airflow intensity corresponding to a schlieren image according to an embodiment of the present application. This method may also be performed by software and/or hardware devices. For example, as shown in FIG. 4, the method may include the following steps.

S401: dividing, based on a preset offset interval, the schlieren image into a plurality of image blocks sequentially in a face orientation, starting from a center point of a human face of the object to be detected in the schlieren image.

The center point of the human face is a centroid position in a human face area, and the preset offset interval may be understood as a distance of each movement of an image area.

It may be understood that in the embodiments of the present application, the setting of the preset offset interval is related to the subsequent setting of an airflow deviation threshold.

For example, in the embodiments of the present application, when determining the center point of the human face of the object to be detected in the schlieren image, human face detection may be performed on the schlieren image first to determine the human face coordinate and the human facial contour of the object to be detected; and the center point of the human face is determined based on the human facial coordinate and the human facial contour, thereby determining the center point of the human face of the object to be detected in the schlieren image.

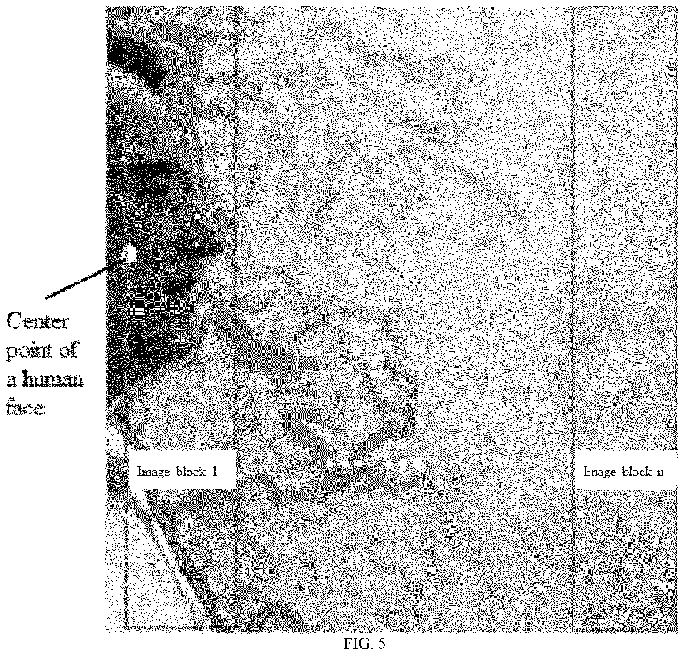

After determining the center point of the human face of the object to be detected in the schlieren image, the schlieren image may be divided into a plurality of image blocks based on the preset offset interval in the face orientation, starting from the center point of the human face of the object to be detected in the schlieren image. This may be seen in FIG. 5, which is a schematic diagram of dividing a schlieren image into a plurality of image blocks according to an embodiment of the present application. In conjunction with FIG. 5, it may be seen that starting from the center point of the human face, the schlieren image is divided into n image blocks based on the preset offset interval in the face orientation, which are respectively image block 1, image block 2, ..., image block n. Image block 1 may be referred to as a first image block, image block 2 may be referred to as a second image block, ..., image block n may be referred to as an nth image block. A distance between the first image block and the center point of the human face is the closest, a distance between the second image block and the center point of the human face is the second closest, ..., and a distance between the nth image block and the center point of the human face is the farthest, thus dividing the schlieren image into n image blocks.

For example, in the embodiments of the present application, when determining the preset offset interval and the airflow deviation threshold, a schlieren image sample of each of a plurality of preset objects wearing a mask standardly may be obtained first. For each schlieren image sample, an offset interval corresponding to the schlieren image sample is determined based on searching for a mask edge in the schlieren image sample, and an airflow deviation corresponding to the schlieren image sample is determined based on the offset interval; an average offset interval corresponding to each of the plurality of schlieren image samples is determined as the preset offset interval, and an average airflow deviation corresponding to each of the schlieren image samples is determined as the airflow deviation threshold, thereby determining the preset offset interval and the airflow deviation threshold.

After dividing to obtain a plurality of image blocks, the detection result may be determined based on the corresponding airflow intensities of the plurality of image blocks, that is, the following S402 is performed:
S402 : determining the detection result based on airflow intensities corresponding to the plurality of image blocks, where the airflow intensity corresponding to the image block is determined based on an average brightness of the image block.

The airflow intensity corresponding to the image block may be determined based on the average brightness of the image block area. Generally, the average brightness of the image block area may be approximated as the airflow intensity corresponding to the image block.

For example, when determining the detection result based on the airflow intensities corresponding to the plurality of image blocks, it is considered that the first image block closest to the center point of the human face does not have a previous image block. Therefore, starting from the second image block in the plurality of image blocks, it is determined whether the difference between the airflow intensity corresponding to the preceding image block thereof, i.e., the first image block and the airflow intensity corresponding to the second image block is greater than the airflow deviation threshold; if the difference is greater than or equal to the airflow deviation threshold, the distance between the second image block and the center point of the human face may be directly determined as the target distance, and the detection result may be determined based on the target distance.

On the contrary, if the difference is less than the airflow deviation threshold, the third image block is determined as the new second image block, the second image block is determined as the new first image block, and whether the difference between the airflow intensity corresponding to the new first image block and the airflow intensity corresponding to the new second image block is greater than the airflow deviation threshold is determined, until it is determined that the difference between the airflow intensity corresponding to the new first image block and the airflow intensity corresponding to the new second image block is greater than or equal to the airflow deviation threshold. Then, the distance between the new second image block and the center point of the human face is determined as the target distance, and the detection result is determined based on the target distance.

As shown in FIG. 5, assuming n image blocks are divided, when determining the detection result based on the airflow intensities corresponding to the n image blocks, starting from image block 2, it may be determined whether the difference between the airflow intensity corresponding to image block 1 and the airflow intensity corresponding to image block 2 is greater than the airflow deviation threshold; if it is less than the airflow deviation threshold, it is continued to determine whether the difference between the airflow intensity corresponding to image block 2 and the airflow intensity corresponding to image block 3 is greater than the airflow deviation threshold; if it is still less than the airflow deviation threshold, then it is continued to determine whether the difference between the airflow intensity corresponding to image block 3 and the airflow intensity corresponding to image block 4 is greater than the airflow deviation threshold; if it is greater than the airflow deviation threshold, a distance between image block 4 and the center point of the human face is determined as the target distance, and the detection result is determined based on the target distance.

For example, when determining the detection result based on the target distance, if the target distance is greater than or equal to the mask threshold, the first detection result is determined as not wearing a mask; if the target distance is less than the mask threshold, the first detection result is determined as wearing a mask, thereby obtaining the first detection result; and then the detection result corresponding to the object to be detected is determined based on the first detection result.

For example, when determining the mask threshold, the target distances corresponding to a plurality of schlieren image samples may be determined first. To distinguish the "target distance" mentioned above, in the embodiments of the present application, the target distances corresponding to the plurality of schlieren image samples may be referred to as target distance samples. It may be understood that the method of determining the target distance sample corresponding to each schlieren image sample is similar to the method of determining the target distance corresponding to the schlieren image mentioned above. The relevant description of determining the target distance corresponding to the schlieren image mentioned above may be referred to. Therefore, the embodiments of the present application do not repeat.

It is assumed that the determined target distance samples corresponding to the plurality of schlieren image samples are: x1, x2, ..., xm, with a total number of m. If these data follow a normal distribution, the mean and variance of the target distance samples may be calculated first, and a mask threshold may be determined based on the quantile of the normal distribution, including the following.

Firstly, the mean $\mu$ and standard deviation $\sigma$ of x1, x2, ..., xm are calculated to determine a normal distribution that follows mathematical expectation $\mu$ and variance $\sigma^2$, which may be expressed as $N(\mu, \sigma^2)$. The accuracy of the first detection result varies for different mask thresholds. For example, under a normal curve, if a lower limit of the airflow deviation threshold is $\mu - 2\sigma$, it indicates that there is a statistically significant 97.73% chance of being determined as not wearing a mask, that is, a correct recognition rate for not wearing a mask is 97.73%, which of course also indicates that some that should not be determined as not wearing a mask may be mis-determined as not wearing a mask. For example, $\mu - k\sigma$ may be understood as the mask threshold. As k increase, the mask threshold decreases, and the more that should be determined as not wearing a mask are included, and a probability of identifying situations where a mask is already worn as not wearing a mask also increases. In other words, the larger the k, the lower the probability of identifying a situation where a mask is already worn as not wearing a mask. It may be understood that in the embodiments of the present application, there is no need to set k as an integer. For each specific k and mask threshold $\mu - k\sigma$, the statistically significant correct recognition rate of not wearing a mask may be directly calculated from the probability density function of the normal distribution $N(\mu, \sigma^2)$ mentioned above, that is, the correct recognition rate P is:

$$P = 1 - \int_{-\infty}^{\mu-k\sigma} \frac{1}{\sqrt{2\pi\delta}} e^{-\frac{(x-\mu)^2}{2\sigma^2}} \mathrm{dx},$$

where x represents the target distance sample corresponding to the schlieren image sample. Using the above formula, assuming a predetermined correct recognition rate P, the corresponding k may be determined based on P reversely, thus determining the mask threshold $\mu - k\sigma$.

For example, when determining the detection result corresponding to the object to be detected based on the first detection result, based on whether the final detection result corresponding to the object to be detected is determined only based on the first detection result, the following two possible embodiments may include the following accordingly.

In an embodiment, if only the first detection result is used to determine the detection result corresponding to the final object to be detected, the first detection result may be directly determined as the final detection result corresponding to the object to be detected. The detection result corresponding to the object to be detected may be accurately determined based on the airflow intensity corresponding to the schlieren image, which solves the problem of low accuracy of mask detection results in related art, thereby effectively improving the accuracy of mask detection results.

In an embodiment, if the final detection result corresponding to the object to be detected is not determined solely based on the first detection result, but combined with the detection result corresponding to the object to be detected obtained by the mask recognition algorithm, a second detection result corresponding to the object to be detected obtained based on the mask recognition algorithm may be obtained; if both the first detection result and the second detection result are wearing a mask, the detection result is determined as wearing a mask; if at least one of the first detection result and the second detection result is not wearing a mask, the detection result is determined as not wearing a mask. By combining the first detection result and the second detection result corresponding to the object to be detected in such a way, the detection result corresponding to the object to be detected may be accurately determined, which solves the problem of low accuracy of mask detection results in related art, thereby effectively improving the accuracy of mask detection results.

For example, the mask recognition algorithm may be a visible light path and an infrared light path input algorithm, or other mask recognition algorithms. Specific settings may be made according to actual needs, and the embodiments of the present application is not specifically limited herein.

Hereinafter, the apparatus for mask wearing detection provided in the present application is described. The apparatus for mask wearing detection described below may be referred to in correspondence with the method for mask wearing detection described above.

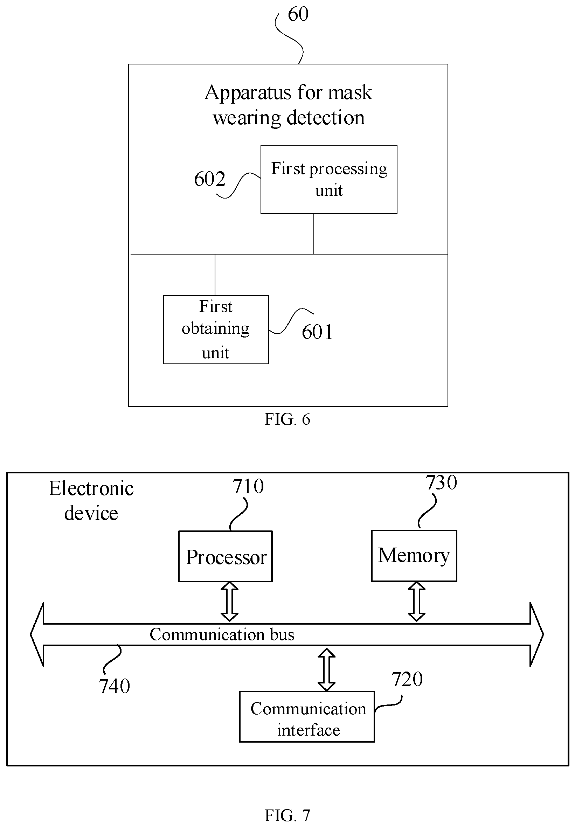

FIG. 6 is a schematic structural diagram of an apparatus for mask wearing detection according to an embodiment of the present application. For example, in FIG. 6, the apparatus for mask wearing detection 60 may include:

a first obtaining unit 601, configured to obtain a schlieren image of an object to be detected; and

a first processing unit 602, configured to determine a detection result corresponding to the object to be detected based on an airflow intensity corresponding to the schlieren image, where the detection result includes not wearing a mask or wearing a mask.

In an embodiment, the first processing unit 602 is further configured to divide, based on a preset offset interval, the schlieren image into a plurality of image blocks sequentially in a face orientation, starting from a center point of a human face of the object to be detected in the schlieren image; and determine the detection result based on the airflow intensities corresponding to the plurality of image blocks, where the airflow intensity corresponding to the image block is determined based on an average brightness of the image block.

In an embodiment, the apparatus for mask wearing detection 60 further includes a second processing unit and a third processing unit, where

the second processing unit is configured to perform human face detection on the schlieren image to determine a human facial coordinate and a human facial contour of the object to be detected; and

the third processing unit is configured to determine the center point of the human face based on the human facial coordinate and the human facial contour.

In an embodiment, the first processing unit 602 is further configured to determine whether a difference between an airflow intensity corresponding to a first image block and an airflow intensity corresponding to a second image block is greater than an airflow deviation threshold, starting from the second image block among the plurality of image blocks; if the difference is greater than or equal to the airflow deviation threshold, determine a distance between the second image block and the center point of the human face as a target distance, and determine the detection result based on the target distance; and if the difference is less than the airflow deviation threshold, determine a third image block as a new second image block, determine the second image block as a new first image block, and determine whether a difference between an airflow intensity corresponding to the new first image block and an airflow intensity corresponding to the new second image block is greater than the airflow deviation threshold, until it is determined that the difference between the airflow intensity corresponding to the new first image block and the airflow intensity corresponding to the new second image block is greater than or equal to the airflow deviation threshold, then determine a distance between the new second image block and the center point of the human face as the target distance, and determine the detection result based on the target distance.

In an embodiment, the first processing unit 602 is further configured to: if the target distance is greater than or equal to a mask threshold, determine that a first detection result is not wearing a mask; if the target distance is less than the mask threshold, determine that the first detection result is wearing a mask; and determine the detection result corresponding to the object to be detected based on the first detection result.

In an embodiment, the first processing unit 602 is further configured to determine the first detection result as the detection result; or, obtain a second detection result corresponding to the object to be detected based on a mask recognition algorithm; if both the first detection result and the second detection result are wearing a mask, determine the detection result as wearing a mask; and if at least one of the first detection result and the second detection result is not wearing a mask, determine the detection result as not wearing a mask.

In an embodiment, the apparatus for mask wearing detection 60 further includes a second obtaining unit, a fourth processing unit, and a fifth processing unit, where

the second obtaining unit is configured to obtain a schlieren image sample of each of a plurality of preset objects wearing a mask standardly;

the fourth processing unit is configured to: for each schlieren image sample, determine, based on searching for a mask edge in the schlieren image sample, an offset interval corresponding to the schlieren image sample, and determine an airflow deviation corresponding to the schlieren image sample based on the offset interval; and

the fifth processing unit is configured to determine an average offset interval corresponding to each of the plurality of schlieren image samples as the preset offset interval, and determine an average airflow deviation corresponding to each of the schlieren image samples as the airflow deviation threshold.

In an embodiment, the schlieren image is a schlieren image in a concave mirror. The first obtaining unit 601 is further configured to obtain an initial schlieren image corresponding to the object to be detected; and determine whether the object to be detected is located at a center position of a concave mirror based on the initial schlieren image; and determine the initial schlieren image as the schlieren image in case that the object to be detected is located at the center position.

The apparatus for mask wearing detection 60 provided in the embodiments of the present application may perform the solutions of the method for mask wearing detection in any of the above embodiments. Its implementation principle and beneficial effects are similar to those of the method for mask wearing detection, and may be referred to the implementation principle and beneficial effects of the method for mask wearing detection, which are not repeated here.

FIG. 7 is a schematic physical structural diagram of an electronic device according to an embodiment of the present application. As shown in FIG. 7, the electronic device may include: a processor 710, a communication interface 720, a memory 730, and a communication bus 740, among which the processor 710, the communication interface 720, and the memory 730 communicate with each other through the communication bus 740. The processor 710 may call logical instructions in the memory 730 to perform a method for mask wearing detection, which includes: obtaining a schlieren image of an object to be detected; and determining a detection result corresponding to the object to be detected based on an airflow intensity corresponding to the schlieren image, where the detection result includes not wearing a mask or wearing a mask.

In addition, the logical instructions in the above-mentioned memory 730 may be implemented in the form of software functional unit and stored in a computer-readable storage medium when sold or used as an independent product. Based on such understanding, the solutions of the present application in essence or a part of the technical solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a flash disk, a mobile hard disk, a read-only memory (ROM), a random access memory (RAM), a magnetic disk, or a compact disk.

In another aspect, the present application further provides a computer program product including a computer program that may be stored on a non-transient computer-readable storage medium. When the computer program is executed by a processor, the computer may perform the above method for mask wearing detection provided by the above method, which includes: obtaining a schlieren image of an object to be detected; and determining a detection result corresponding to the object to be detected based on an airflow intensity corresponding to the schlieren image, where the detection result includes not wearing a mask or wearing a mask.

In still another aspect, the present application further provides a non-transient computer-readable storage medium on which a computer program is stored. When executed by a processor, the computer program implements the method for mask wearing detection provided by the above method, which includes: obtaining a schlieren image of an object to be detected; and determining a detection result corresponding to the object to be detected based on an airflow intensity corresponding to the schlieren image, where the detection result includes not wearing a mask or wearing a mask.

The apparatus embodiments described above are only schematic, where the units described as separate components may be or may not be physically separated, and the components displayed as units may be or may not be physical units, that is, they may be located in one place or distributed across a plurality of network units. Some or all modules may be selected according to actual needs to achieve the purpose of this embodiment. Those skilled in the art may understand and implement them without creative labor.

Through the description of the above implementations, those skilled in the art may clearly understand that each implementation may be achieved through software and necessary universal hardware platforms, and it may also of course be achieved through hardware. Based on such understanding, the solutions mentioned above, or the parts that contribute to related art, may be embodied in the form of software product, which may be stored in computer-readable storage media such as ROM/RAM, magnetic disks, optical disks, etc., including several instructions to enable a computer device (which may be a personal computer, a server, or a network device, etc.) to perform the methods described in various embodiments or certain parts of the embodiments.

Finally, it should be noted that the above embodiments are only used to illustrate the solutions of the present application, and not to limit them; although the present application has been described in detail with reference to the aforementioned embodiments, those skilled in the art should understand that they may still modify the solutions described in each of the aforementioned embodiments, or replace some of the features equally; these modifications or substitutions do not deviate the essence of the corresponding solutions from the scope of the solutions of the various embodiments of the present application.

**Claims**

1. A method for mask wearing detection, comprising:

   obtaining a schlieren image of an object to be detected; and
   determining a detection result corresponding to the object to be detected based on an airflow intensity corresponding to the schlieren image, wherein the detection result comprises not wearing a mask or wearing a mask.

2. The method of claim 1, wherein determining the detection result corresponding to the object to be detected based on the airflow intensity corresponding to the schlieren image comprises:

   dividing, based on a preset offset interval, the schlieren image into a plurality of image blocks sequentially in a face orientation, starting from a center point of a human face of the object to be detected in the schlieren image; and
   determining the detection result based on airflow intensities corresponding to the plurality of image blocks, wherein an airflow intensity corresponding to an image block is determined based on an average brightness of the image block.

3. The method of claim 2, further comprising:

   performing human face detection on the schlieren image to determine a human facial coordinate and a human facial contour of the object to be detected; and
   determining the center point of the human face based on the human facial coordinate and the human facial contour.

4. The method of claim 2 or 3, wherein determining the detection result based on airflow intensities corresponding to the plurality of image blocks comprises:

   determining whether a difference between an airflow intensity corresponding to a first image block and an airflow intensity corresponding to a second image block is greater than an airflow deviation threshold, starting from the second image block among the plurality of image blocks;
   if the difference is greater than or equal to the airflow deviation threshold, determining a distance between the second image block and the center point of the human face as a target distance, and determining the detection result based on the target distance; and
   if the difference is less than the airflow deviation threshold, determining a third image block as a new second image block, determining the second image block as a new first image block, and determining whether a difference between an airflow intensity corresponding to the new first image block and an airflow intensity corresponding to the new second image block is greater than the airflow deviation threshold, until it is determined that the difference between the airflow intensity corresponding to the new first image block and the airflow intensity corresponding to the new second image block is greater than or equal to the airflow deviation threshold, then determining a distance between the new second image block and the center point of the human face as the target distance, and determining the detection result based on the target distance.

5. The method of claim 4, wherein determining the detection result based on the target distance comprises:

   if the target distance is greater than or equal to a mask threshold, determining that a first detection result is not wearing a mask; if the target distance is less than the mask threshold, determining that the first detection result is wearing a mask; and
   determining the detection result corresponding to the object to be detected based on the first

**6.** The method of claim 5, wherein determining the detection result corresponding to the object to be detected based on the first detection result comprises:

determining the first detection result as the detection result;
or,
obtaining a second detection result corresponding to the object to be detected, wherein the second detection result is obtained based on a mask recognition algorithm; if both the first detection result and the second detection result are wearing a mask, determining the detection result as wearing a mask; and if at least one of the first detection result and the second detection result is not wearing a mask, determining the detection result as not wearing a mask.

**7.** The method of claim 4, further comprising:

obtaining a schlieren image sample of each of a plurality of preset objects wearing a mask standardly;
for each schlieren image sample, determining, based on searching for a mask edge in the schlieren image sample, an offset interval corresponding to the schlieren image sample, and determining an airflow deviation corresponding to the schlieren image sample based on the offset interval; and
determining an average of offset intervals corresponding to a plurality of schlieren image samples as the preset offset interval, and determining an average of airflow deviations corresponding to the schlieren image samples as the airflow deviation threshold.

**8.** The method of any of claims 1 to 3, wherein the schlieren image is a schlieren image in a concave mirror, and obtaining the schlieren image of the object to be detected comprises:

obtaining an initial schlieren image corresponding to the object to be detected;
determining whether the object to be detected is located at a center position of a concave mirror based on the initial schlieren image; and
determining the initial schlieren image as the schlieren image in case that the object to be detected is located at the center position.

**9.** An apparatus for mask wearing detection, comprising:

a first obtaining unit, configured to obtain a schlieren image of an object to be detected; and
a first processing unit, configured to determine a detection result corresponding to the object to be detected based on an airflow intensity corresponding to the schlieren image, wherein the detection result comprises not wearing a mask or wearing a mask.

**10.** An electronic device comprising a memory, a processor, and a computer program stored on the memory and executable on the processor, wherein the processor, when executing the computer program, performs the method of any of claims 1 to 8.

**11.** A non-transient computer-readable storage medium storing a computer program, wherein the computer program, when executed by a processor, performs the method of any of claims 1 to 8.

**12.** A computer program product comprising a computer program, wherein the computer program, when executed by a processor, performs the method of any of claims 1 to 8.

FIG. 1

FIG. 2

Obtaining a schlieren image of an object to be detected — S301

Determining a detection result corresponding to the object to be detected based on an airflow intensity corresponding to the schlieren image, where the detection result includes not wearing a mask or wearing a mask — S302

FIG. 3

Dividing, based on a preset offset interval, the schlieren image into a plurality of image blocks sequentially in a face orientation, starting from a center point of a human face of the object to be detected in the schlieren image — S401

Determining the detection result based on airflow intensities corresponding to the plurality of image blocks, where the airflow intensity corresponding to an image block is determined based on an average brightness of the image block — S402

FIG. 4

FIG. 5

60

Apparatus for mask
wearing detection

602

First processing
unit

First
obtaining
unit

601

FIG. 6

Electronic
device

710

730

Processor

Memory

Communication bus

740

720

Communication
interface

FIG. 7

## INTERNATIONAL SEARCH REPORT

| | International application No. |
|---|---|
| | **PCT/CN2023/099867** |

| A. | CLASSIFICATION OF SUBJECT MATTER |
|---|---|

G06V40/16(2022.01)i

According to International Patent Classification (IPC) or to both national classification and IPC

| B. | FIELDS SEARCHED |
|---|---|

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

CNKI, CNTXT, ENTXT, ENTXTC, VEN: 口罩, 面罩, 气流, 纹影, 图像, 检测, 识别, mask, airflow, ghost image, schlieren image, detect, identif+

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 114913567 A (WUHAN TCL GROUP INDUSTRIAL RESEARCH INSTITUTE CO., LTD.) 16 August 2022 (2022-08-16) description, paragraphs 6-18 | 1-3, 8-12 |
| Y | CN 114791269 A (NANJING NORMAL UNIVERSITY) 26 July 2022 (2022-07-26) description, paragraphs 2-20 | 1-3, 8-12 |
| A | CN 113283405 A (GLASSSIX TECHNOLOGY (BEIJING) CO., LTD.) 20 August 2021 (2021-08-20) entire document | 1-12 |
| A | US 2021295015 A1 (BEIJING BAIDU NETCOM SCIENCE AND TECHNOLOGY CO., LTD.) 23 September 2021 (2021-09-23) entire document | 1-12 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 July 2023** | **21 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/099867**

| Patent document cited in search report | | | Publication date (day/month/year) | Patent family member(s) | | | Publication date (day/month/year) |
|---|---|---|---|---|---|---|---|
| CN | 114913567 | A | 16 August 2022 | None | | | |
| CN | 114791269 | A | 26 July 2022 | None | | | |
| CN | 113283405 | A | 20 August 2021 | None | | | |
| US | 2021295015 | A1 | 23 September 2021 | EP | 3885980 | A1 | 29 September 2021 |
| | | | | JP | 2021149961 | A | 27 September 2021 |
| | | | | KR | 20210118739 | A | 01 October 2021 |
| | | | | CN | 113435226 | A | 24 September 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022113710126